Europäisches Patentamt

European Patent Office

Office européen des brevets

(11) EP 1 205 514 A1

(12) ## DEMANDE DE BREVET EUROPEEN

(43) Date de publication:
**15.05.2002 Bulletin 2002/20**

(51) Int Cl.7: **C08K 3/00**, C08L 27/16, H01B 1/20

(21) Numéro de dépôt: **01402755.1**

(22) Date de dépôt: **24.10.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **13.11.2000 FR 0014544**
**20.02.2001 FR 0102264**

(71) Demandeur: **Atofina**
**92800 Puteaux (FR)**

(72) Inventeurs:
• **Korzhenko, Alexander**
**72000 Le Mans (FR)**

• **Rastelletti, Emmanuel**
**27550 Nassandres (FR)**
• **Sharpe-Hill, R.G., AITT**
**County Down, BT 30 9 AT (IE)**

(74) Mandataire: **Neel, Henry et al**
**Atofina**
**D.C.R.D./D.P.I.**
**4, Cours Michelet**
**La Défense 10**
**92091 Paris La Défense Cedex (FR)**

(54) **Matériau composite polymérique conducteur à résistance auto-controlée par la température**

(57) La présente invention concerne un matériau composite comprenant en poids, le total étant 100% :

A) 40 à 90% de PVDF homopolymère ou copolymère cristallisé essentiellement en forme β,
B) 10 à 60% d'une charge conductrice,
C) 0 à 40% d'un polymère cristallin ou semi-cristallin,
D) 0 à 40% d'une charge différente de C,

et tel que les cristaux en forme β sont nucléés sur la surface des particules de la charge conductrice.
Ce matériau est conducteur à résistance auto-controlée par la température. Il montre une augmentation de la résistance en fonction de la température (effet PTC ou *"Positive Temperature Coefficient"*), de sorte que l'intensité se stabilise à une température d'équilibre.

EP 1 205 514 A1

110 V (AC)

Réaction si on souffle sur le film

température

intensité

**Description**

[Domaine de l'invention]

La présente invention concerne un matériau composite polymérique conducteur à résistance auto-controlée par la température. Il s'agit plus particulièrement d'un polymère fluoré contenant un conducteur tel que par exemple du noir de carbone ou tout autre électroconducteur.

Il est possible de rendre un composite conducteur par incorporation de graphite dans une matrice polymère. L'application d'une tension suffisante conduit à un échauffement par effet Joule. En absence d'un mécanisme disjoncteur, la température croit jusqu'à destruction du matériau. Le matériau de la présente invention est à base d'un polymère fluoré chargé d'un conducteur tel que par exemple du graphite, qui montre une augmentation de la résistance en fonction de la température (effet PTC ou *"Positive Temperature Coefficient"*), de sorte que l'intensité se stabilise à une température d'équilibre. Cet effet PTC permet donc une régulation thermique de l'intensité du courant, il présente de nombreux avantages par comparaison avec les résistances traditionnelles :

- La régulation des systèmes de chauffage électrique est classiquement obtenue par inclusion dans le circuit d'un disjoncteur thermique. En cas de panne de ce dernier le circuit ou le fusible de sécurité est grillé. Le matériau PTC s'autorégule sans qu'il soit nécessaire d'inclure ni disjoncteur ni fusible.
- Le système chauffant PTC présente un moindre risque de combustion et de court-circuit.
- En cas de mise à la terre involontaire d'une zone d'élément chauffant PTC il ne se produit pas de court circuit.
- L'effet PTC génère une température modérée, ce qui présente 2 bénéfices par rapport aux systèmes traditionnels :

  ➢ Les spécifications imposées aux matériaux isolants doivent être moins sévères ;
  ➢ L'apport de chaleur s'effectue par une surface plus étendue.

- Le matériau composite peut être transformé par les méthodes utilisées dans l'industrie des plastiques (co-extrusion, moulage, etc.). Il peut aussi être appliqué comme une peinture sur les substrats isolants de toute géométrie.

[L'art antérieur et le problème technique]

L'art antérieur a décrit deux types de systèmes polymères composites qui présentent l'effet PTC.

**Selon un premier type** l'effet PTC est basé sur le phénomène de l'expansion des cristaux polymères perturbant le réseau de la charge conductrice. La résistance du composite diminue lentement quand on augmente la quantité du noir de carbone dans une matrice polymèrique semi-cristalline, jusqu'à une concentration où la résistance chute. Cette dernière représente une transition géométrique qu'on appelle le seuil de percolation. Il a été trouvé que le maximum de l'effet PTC correspond à une concentration critique qui se trouve au voisinage du seuil de percolation. Quand la température du matériau s'approche de la fusion de la matrice, une expansion de la zone cristalline déclenche l'effet PTC. Cependant une haute énergie des particules du noir de carbone et un bas module de cisaillement de la matrice provoquent une chute de la résistance, connue comme l'effet NTC (*Negative Temperature Coefficient*). Ce premier type est décrit dans les références suivantes (CA désigne les Chemical Abstracts):

**131:243891 CA**

TI Organic PTC thermistor materials with high transitive temperature
AU Yang, Fubiao; Li, Yongqin; Li, Xiaojun
CS Department 5, National University of Defense Technology, Changsha, 410073, Peop. Rep. China
SO Gongneng Cailiao (1998), 29(Suppl.), 724-725
CODEN: GOCAEA; ISSN: 1001-9731
PB Gongneng Cailiao Bianjibu

**129:331461 CA**

TI Effect of thermal treatment on crystallization and PTC properties of conductive PVDF/CB composite
AU Wang, Jikui; Wang, Gengchao; Zhang, Bingyu; Fang, Bin; Zhang, Zhiping
CS Inst. Mater. Sci. Eng., East China Univ. Sci. Technol., Shanghai, 200237, Peop. Rep. China
SO Gaofenzi Cailiao Kexue Yu Gongcheng (1998), 14(5), 93-95
CODEN: GCKGEI; ISSN: 1000-7555
PB "Gaofenzi Cailiao Kexue Yu Gongcheng" Bianjibu

**125:277325 CA**

TI Influences of crystallization histories on PTC/NTC effects of PVDF/CB composites
AU Zhang, Mingyin; Jia, Wentao; Chen, Xinfang
CS Dep. Materials Science, Jilin Univ., Changchun, 130023, Peop. Rep. China
SO J. Appl. Polym. Sci. (1996), 62(5), 743-747 CODEN: JAPNAB; ISSN: 0021-8995

**104:121274 CA**

TI Heaters
IN Shibata, Tsuneo; Nishida, Takeo; Terakado, Masayuki; Nitta, Isao
PA Matsushita Electric Industrial Co., Ltd., Japan
SO Jpn. Tokkyo Koho, 5 pp.
CODEN: JAXXAD

**Selon un deuxième type** L'effet PTC est basé sur la présence de deux polymères immiscibles. Parmi des matériaux de ce type les systèmes PVDF/HDPE chargés en noir de carbone sont les plus connus. Les phases du PVDF et HDPE sont immiscibles, donc l'effet PTC dans ce cas dépend beaucoup de la morphologie et de la distribution du noir de carbone entre ces deux phases. Le noir de carbone est préférablement dispersé dans la phase HDPE qui devient la phase conductrice. Si le PVDF est en bon équilibre par rapport au HDPE, la phase PVDF forme une structure particulière favorable pour l'effet PTC. Une répartition singulière de la phase PE conductrice dans la phase PVDF est la condition pour contrecarrer l'effet NTC qui se produit à la fusion du HDPE qui est inférieure à celle du PVDF. Ce deuxième type est décrit dans les références suivantes :

**131:287163 CA**

TI Carbon black-filled immiscible blends of poly(vinylidene fluoride) and high density polyethylene: the relationship between morphology and positive and negative température coefficient effects
AU Feng, Jiyun; Chan, Chi-Ming
CS Department of Chemical Engineering Advanced Engineering Materials Facility, The Hong Kong University of Science and Technology, Kowloon, Hong Kong
SO Polym. Eng. Sci. (1999), 39(7), 1207-1215
CODEN: PYESAZ; ISSN: 0032-3888
PB Society of Plastics Engineers

**130:96227 CA**

TI Carbon black-filled immiscible blends of poly(vinylidene fluoride) and high density polyethylene: electrical properties and morphology
AU Feng, Jeng; Chan, Chi-Ming
CS Dep. of Chemical Engineering, Advanced Engineering Materials Facility, The Hong Kong University of Science and Technology, Kowloon, Hong Kong
SO Polym. Eng. Sci. (1998), 38(10), 1649-1657
CODEN: PYESAZ; ISSN: 0032-3888
PB Society of Plastics Engineers

**130:52964 CA**

TI Carbon black-filled immiscible blend of poly( vinylidene fluoride) and high-density polyethylene: electrical properties and morphology
AU Feng, Jiyun; Chan, Chi-Ming
CS Department of Chemical Engineering, The Hong Kong University of Science and Technology, Kowloon, Hong Kong
SO Annu. Tech. Conf. - Soc. Plast. Eng. (1998), 56th(Vol. 2), 2476-2480
CODEN: ACPED4; ISSN: 0272-5223
PB Society of Plastics Engineers

et enfin **la demande de brevet WO 9805503.**

On a maintenant trouvé qu'un matériau composite constitué (i) d'un mélange de PVDF homopolymère ou copolymère cristallisé essentiellement en forme β et (ii) d'une charge conductrice et tel que les cristaux en forme β sont nucléés sur la surface des particules de la charge conductrice présente l'effet PTC mais selon un mécanisme différent de l'art antérieur.

Les PVDF utilisés dans le composite se cristallisent en forme β (ou la forme I). C'est un arrangement cristallin polaire piézoélectrique, dont les cristaux sont capables de s'orienter dans le sens du champ électrique et contribuer au transport de charges. Par exemple s'agissant d'un PVDF copolymère (VF2, HFP et TFE) cette organisation morphologique se désorganise avec la température à mesure que la surface des cristaux riches en motifs HFP et TFE est perturbée par la fusion, le transfert des charges entre des particules de la charge conductrice ralentit et la résistance augmente, ce qui se traduit par l'effet PTC.

[Brève description de l'invention]

La présente invention concerne un matériau composite comprenant en poids, le total étant 100% :

A) 40 à 90% de PVDF homopolymère ou copolymère cristallisé essentiellement en forme β,
B) 10 à 60% d'une charge conductrice,
C) 0 à 40% d'un polymère cristallin ou semi-cristallin,
D) 0 à 40% d'une charge différente de C,

et tel que les cristaux en forme β sont nucléés sur la surface des particules de la charge conductrice.

Pour une application "chauffage" avec une autorégulation de la température, le matériau manifestant l'effet PTC de la présente invention, basée sur les propriétés piézo-électriques du polymère utilisé, a de nombreux avantages par rapport aux matériaux déjà décrits :

- Dans notre système la résistance est aussi fonction de la concentration de la charge conductrice, laquelle n'est toutefois pas limitée à une concentration critique; L'effet PTC s'observe donc sur une plage de résistance très large. Cela permet ainsi d'ajuster par le taux de charge conductrice le niveau de tension pour obtenir l'effet Joule nécessaire à une bonne autorégulation de la température par l'effet PTC.
- Le matériau de l'invention présente un effet PTC sur un large domaine de températures allant de la température de transition vitreuse (env -30°C) jusqu'à la fusion (90 à 165°C, selon la formulation), tandis que pour les matériaux de l'art antérieur le domaine de température où le contrôle s'exerce est restreint à la fusion de la zone cristalline. C'est donc une amélioration notable du matériau à l'effet PTC qui permet d'obtenir et de réguler la température souhaitée sur un vaste domaine de températures en dessous de la fusion.
- Le pic de l'effet PTC/NTC est beaucoup plus étroit pour les systèmes de l'art antérieur. Le composite de la présente invention, par une meilleure autorégulation aux températures plus basses, a moins de risque de dépasser la température de ce pic, puis d'être surchauffé.
- Le matériau de la présente invention régénère sa morphologie après la surchauffe, tandis que la réversibilité est aléatoire pour les composites de l'art antérieur.
- Le composite proposé est facilement soluble dans les solvants habituels. Le matériau préparé à partir de la solution où de l'état fondu a les mêmes propriétés alors que les polymères utilisés dans les composites de l'art antérieur sont très difficilement solubles.

Le matériau de l'invention s'applique comme un revêtement déposé sur un substrat isolant tel que de la ceramique, du verre, du bois, des fibres textiles, des tissus et toute surface isolante. Pour le préparer il suffit de disperser la. Pour le préparer il suffit de disperser la charge conductrice (B) dans le polymère (A) qui peut être soit à l'état fondu soit en solution dans un solvant adéquat tel que par exemple l'acétone ou la N-methyl pyrrolidone. Le polymère (A) contenant la charge (B) et éventuellement (C) et (D) qui est soit à l'état fondu soit dans un solvant est appliqué comme une peinture sur la surface isolante (préférablement une céramique). Les bornes métalliques pour la connexion au circuit électrique peuvent être disposées aux extrémités du revêtement avant ou après l'application. Après refroidissement du polymère fondu ou après séchage pour éliminer le solvant l'élément chauffant est prêt.

L'échauffement se produit lors du passage d'un courant électrique *i*. Selon l'effet Joule la quantité de chaleur W dégagée pendant un temps *t* est :

$$W = R i^2 t.$$

Cette équation montre, que l'échauffement efficace peut être assuré à condition que la résistance du système soit telle que l'intensité du courant soit suffisante à la tension appliquée. Cette optimisation s'effectue par une variation de la proportion Polymère/Charge conductrice.

A l'échelle macroscopique, le matériau composite se présente comme une matrice du polymère (A) contenant la charge (B). Par exemple si (A) est un copolymère du fluorure de vinylidene (VF2), du tétrafluoréthylene (TFE) et de l'hexafluoropropylène (HFP) (Kynar® 9301) chargé de graphite; à l'échelle macroscopique, le composite se présente comme une matrice de ce copolymère chargée de graphite. L'espace entre les particules de graphite est partagé entre les cristaux de type β (une structure polaire *trans-trans-trans*) et une zone amorphe constituée de motifs de HFP et TFP. Pour élever la limite supérieure du domaine de température de contrôle, une quantité (jusqu'à 40%) de PVDF, ou de son copolymère avec trifluoréthylène où tetrafluoréthylène peut être ajoutée à condition qu'une partie du $VF_2$ se cristallise en forme de type β. La composition peut contenir (C) et/ou (D) pour modifier les propriétés mécaniques.

[Description détaillée de l'invention]

**S'agissant du polymère (A)** et plus particulièrement des copolymères le comonomère est avantageusement choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de comonomère on peut citer le fluorure de vinyle; le trifluoroethylene (VF3); le chlorotrifluoroethylene (CTFE); le 1,2-difluoroethylene; le tetrafluoroethylene (TFE); l'hexafluoropropylene (HFP); les perfluoro (alkyl vinyl) ethers tels que le perfluoro(methyl vinyl)ether (PMVE), le perfluoro(ethyl vinyl) ether (PEVE) et le perfluoro (propyl vinyl) ether (PPVE); le perfluoro( 1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH2OPO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 ou 4; le perfluorobutyl ethylene (PFBE); le 3,3,3-trifluoropropene et le 2-trifluoromethyl-3 ,3 ,3 -trifluoro- 1 -propene. On peut utiliser plusieurs comonomères.

Le polymère (A) dans le matériau composite est cristallisé sous la forme β soit parce qu'il était déjà sous la forme β avant son mélange avec la charge conductrice (B) soit parce qu'au cours de la préparation du composite il a cristallisé sous cette forme β. Par exemple le PVDF copolymère mis en solution dans un solvant en l'absence de charges cristallise sous forme β quand on laisse évaporer le solvant. Selon une autre méthode le PVDF homopolymère ou copolymère en présence des charges (B) cristallise essentiellement sous forme β quand on fait un traitement thermique suivi d'un refroidissement ralenti. On ne sortirait pas du cadre de l'invention si le polymère(A) n'est pas cristallisé en totalité sous la forme β mais cette proportion de forme β doit être suffisante pour conduire à l'effet PTC. Avantageusement cette proportion de forme β dans le polymère (A) doit être d'au moins 60% et de préférence 75%. Le présence de la phase cristalline piézo-électrique n'est pas la seule condition pour obtenir l'effet PTC. Les cristaux en forme β (ou la forme I) doivent être nucléés sur la surface des particules d'une charge conductrice tel que par exemple du graphite.

A titre d'exemple du polymère (A) on peut citer le PVDF homopolymère présentant un taux quelconque de défauts (on utilise aussi le terme "défaut de retournement" ou "taux de retournement"). On entend par défaut de retournement toute association de type -CH2-CF2-CF2-CH2- le long de la chaîne de polymère (association appelée aussi tête-tête par opposition à l'association tête-queue type -CH2-CF2-CH2-CF2-). On peut mesurer le taux de défauts à l'aide de la RMN du fluor. On donne donc généralement le taux de défauts de retournement en pourcentage.

On peut encore citer les copolymères du VF2 et du VF3 ayant au moins 60% en moles de VF2 et avantageusement au moins 75%; les copolymères du VF2, du TFE et de l'HFP ayant au moins 15% en moles de motifs TFE et avantageusement les copolymères VF2-TFE-HFP de composition molaire respective 60 à 80/ 15 à 20/ 0 à 25.

**S'agissant de la charge conductrice (B)** elle peut être choisie parmi toutes les poudres de matériaux conducteurs de l'électricité et avantageusement les métaux en poudre, le noir de carbone, le graphite et les oxydes métalliques tels ceux cités dans le brevet FR 2774100. En modifiant la proportion de (B) et de (A), et à voltage constant, on peut modifier la température obtenue par effet PTC. Cette température peut être comprise entre la température de fusion et -50°C et avantageusement entre -20°C et 130°C Plus on augmente la proportion de (B) plus la température monte.

**S'agissant du polymère (C)** c'est tout polymère qui ne perturbe pas la cristallisation du polymère (A). A titre d'exemple on peut citer le PVDF homopolymère qui n'est pas sous forme β et les copolymères VF2-HFP contenant au moins 85% de VF2 et avantageusement au moins 90%.

**S'agissant de la charge (D)** on peut citer les charges habituelles des polymères fluorés telles que la silice, le PMMA, les anti UV.

Le matériau composite de l'invention peut être préparé selon deux procédés. Selon le premier on mélange les différents constituants (A), (B) et éventuellement (C) et/ou (D) de sorte que (A) soit à l'état fondu puis on applique le produit obtenu sur la surface isolante. On peut utiliser les dispositifs habituels de mélange des polymères thermoplastiques tels que les mélangeurs, les extrudeuses. On ne sortirait pas du cadre de l'invention en refroidissant et stockant sous forme de granulés le produit obtenu à l'issue de cette opération de mélange puis qu'ensuite on le chauffe pour le fondre puis on l'applique sur la surface isolante.

Selon le deuxième procédé on met les différents constituants (A), (B) et éventuellement (C) et/ou (D) dans un solvant jusqu'à obtenir une dispersion épaisse qui peut être appliquée comme une peinture sur la surface de l'isolant. Le solvant peut être choisi parmi l'acétone, l'isophorone, le diméthylformamide (DMF), la methylethylcetone (MEK) et la N-methyl pyrolidone (NMP).

On peut aussi combiner ces deux procédés par exemple en mélangeant (A) et (B) à l'état fondu puis on on dissout l'ensemble ainsi qu'éventuellement (C) et/ou (D) dans un solvant.

La présente invention concerne aussi les dispositifs chauffants comprenant le matériau composite décrit plus haut.

[Exemples]

Exemple 1

La formulation suivante, en poids, donne une bonne régulation thermique quand elle est appliquée entre les bornes distantes de 10cm et placée sous une tension de 110V.

Kynar® 9301 -52%

Graphite 9000 (des particules de l'ordre 5-10μm) - 48%

100 parties de la composition ci dessus sont dissoutes dans 30 parties d'acétone.

**Kynar® 9301** désigne un copolymère VF2-TFE-HFP de proportions respectives en moles 72 / 18 / 10 ,

**Graphite 9000** désigne des particules de l'ordre 5-10μm.

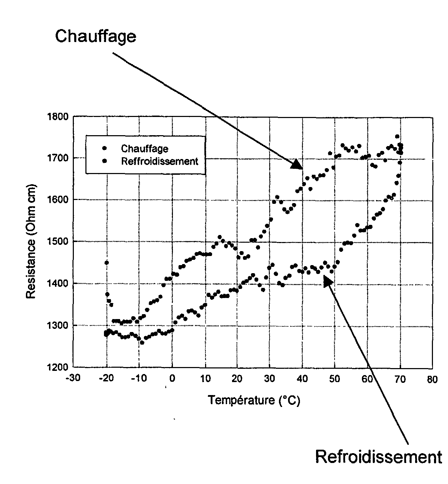

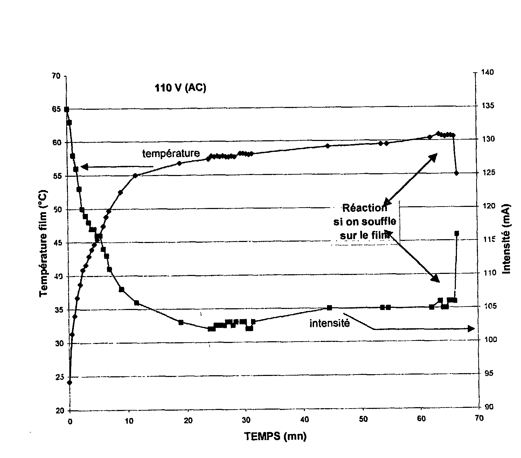

Le mélange est appliqué sur plaque de céramique 10x10 cm. Deux cordons métalliques ont été déposés sur le film pour servir ensuite d'électrodes. Après un séchage d'1 h à 60°C, le film montre une augmentation de la résistance quand la température croît par l'apport extérieur de chaleur. Les résultats sont reportés sur la fig 1. Sous une tension de110V le revêtement s'échauffe par effet Joule, l'intensité diminue au fur et à mesure que la température croît. Les résultats sont reportés sur la fig 2.

Exemple 2

On a réalisé des mélanges de Kynar®9301 et du graphite 9000. Ces mélanges ont été dissous dans un solvant puis séchées à la température ambiante. Les résultats sont reportés sur le tableau 1 suivant.

Tableau 1

| % B (graphite) | Solvant | épaisseur mm | Distance entre les contacts/ largeur, mm | R, Ohm | U, V | T°C | I, mA |
|---|---|---|---|---|---|---|---|
| 50 | MEK | 0.1 | 60/70 | 43 | 38 | 70 | |
| 45 | MEK | 0.1 | 80/60 | 75 | 43 | 50 | 266 |
| 40 | MEK | 0.06 | 90/70 | 180 | 50 | 50 | |
| 35 | MEK | 0.06 | 90/70 | 640 | 60 | 50 | |
| 30 | MEK | 0.05 | 75/65 | 350 | 60 | 50 | 125 |
| 25 | MEK | 0.045 | 80/60 | 980 | 67 | 50 | 60 |
| 40 | Acétone | 0.085 | 90/70 | 114 | 40 | 50 | 223 |
| 35 | Acétone | 0.055 | 90/65 | 315 | 70 | 50 | 16 |
| 30 | Acétone | 0.045 | 85/65 | 325 | 75 | 50 | 15 |
| 20 | Acétone | 0.1 | 70/80 | 530 | 120 | 50 | 16 |
| 15 | Acétone | 0.1 | 70/80 | 1337 | 210 | 44 | 5 |
| 10 | Acétone | 0.1 | 70/80 | 15200 | 210 | 35.5 | 2.4 |

On constate que la température désirée (exemple 50°C) peut être obtenue ou par variation du voltage, ou en modifiant la proportion polymère/graphite, ou par la géométrie (l'épaisseur, la distance entre les bornes).

Exemple 3

La peinture a été préparée à base de 7% solution de PVDF homopolymère (KYNAR®500) dans le DMF en ajoutant 25% (par rapport au PVDF) de graphite. Une plaque céramique isolante, 10x10 cm, a été revêtue et deux bornes de cuivre ont été collées sur les extrémités de la surface. Le revêtement a été séché à 120°C 4h, puis, il a été recuit à 170°C pendant 30 min et refroidi à l'ambiante.

Avant le test la plaque a été stockée 2 mois. La résistance est 837 Ohm et l'épaisseur env. 50 μm.

Une tension alternative 150V a été appliquée sur les bornes et une évolution de la température a été suivie. Au bout de 30 min env. la température s'est stabilisée à 84°C et pendant 5 jours a augmenté lentement à 91°C et est restée constante (±1°C) pendant 2 mois. Après ce test, la résistance de la plaque a légèrement baissé (750 Ohm).

Pendant quelques jours la plaque a été mise sous la même tension et a gardé toujours la même température (91 ±1°C).

Ce test montre une très bonne performance de la peinture chauffante Kynar 500 / Graphite.

## Revendications

**1.** Matériau composite comprenant en poids, le total étant 100% :

A) 40 à 90% de PVDF homopolymère ou copolymère cristallisé essentiellement en forme β,
B) 10 à 60% d'une charge conductrice,
C) 0 à 40% d'un polymère cristallin ou semi-cristallin,
D) 0 à 40% d'une charge différente de C.

et tel que les cristaux en forme β sont nucléés sur la surface des particules de la charge conductrice.

**2.** Matériau selon la revendication 1 dans lequel (A) est choisi parmi les copolymères du VF2 et du VF3 ayant au moins 60% en moles de VF2.

**3.** Matériau selon la revendication 1 dans lequel (A) est choisi parmi les copolymères du VF2, du TFE et de l'HFP ayant au moins 15% en moles de motifs TFE.

**4.** Matériau selon la revendication 3 dans lequel (A) est choisi parmi les copolymères VF2-TFE-HFP de composition molaire respective 60 à 80/ 15 à 20/ 0 à 25.

**5.** Matériau selon l'une quelconque des revendications précédentes dans lequel (C) est choisi parmi le PVDF homopolymère qui n'est pas sous forme β et les copolymères VF2-HFP contenant au moins 85% de VF2.

**6.** Dispositif chauffant comprenant le matériau composite selon l'une quelconque des revendications précédentes.

**Office européen des brevets**

## RAPPORT DE RECHERCHE EUROPEENNE

Numéro de la demande

EP 01 40 2755

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 153 091 A (MITSUBISHI PETROCHEMICAL CO) 28 août 1985 (1985-08-28) <br> * page 7 - page 8 * <br> * revendications 1-10 * | 1-6 | C08K3/00 <br> C08L27/16 <br> H01B1/20 |
| X | EP 0 074 281 A (RAYCHEM CORP) 16 mars 1983 (1983-03-16) <br> * page 9; tableau 1 * <br> * revendications 1,2 * | 1 | |
| X | FR 2 516 293 A (DEVALIERE JOSEPH) 13 mai 1983 (1983-05-13) <br> * revendication 1 * | 1 | |
| X | DATABASE WPI <br> Section Ch, Week 199720 <br> Derwent Publications Ltd., London, GB; <br> Class A85, AN 1997-221847 <br> XP002171351 <br> & JP 09 067462 A (TDK CORP), <br> 11 mars 1997 (1997-03-11) <br> * abrégé * | 1 | DOMAINES TECHNIQUES RECHERCHES (Int.Cl.7) <br><br> C08K <br> H01B |

Le présent rapport a été établi pour toutes les revendications

| Lieu de la recherche | Date d'achèvement de la recherche | Examinateur |
|---|---|---|
| LA HAYE | 4 mars 2002 | Siemens, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

**ANNEXE AU RAPPORT DE RECHERCHE EUROPEENNE
RELATIF A LA DEMANDE DE BREVET EUROPEEN NO.**           EP 01 40 2755

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

04-03-2002

| Document brevet cité au rapport de recherche | | Date de publication | Membre(s) de la famille de brevet(s) | | Date de publication |
|---|---|---|---|---|---|
| EP 0153091 | A | 28-08-1985 | JP | 1808697 C | 10-12-1993 |
| | | | JP | 5018861 B | 15-03-1993 |
| | | | JP | 60168742 A | 02-09-1985 |
| | | | DE | 3571044 D1 | 20-07-1989 |
| | | | EP | 0153091 A2 | 28-08-1985 |
| | | | US | 4582864 A | 15-04-1986 |
| EP 0074281 | A | 16-03-1983 | AT | 35745 T | 15-07-1988 |
| | | | CA | 1236246 A1 | 03-05-1988 |
| | | | DE | 3278775 D1 | 18-08-1988 |
| | | | EP | 0074281 A1 | 16-03-1983 |
| | | | GB | 2106920 A ,B | 20-04-1983 |
| | | | JP | 1674524 C | 26-06-1992 |
| | | | JP | 3034498 B | 22-05-1991 |
| | | | JP | 58053939 A | 30-03-1983 |
| | | | JP | 1828123 C | 28-02-1994 |
| | | | JP | 3095248 A | 19-04-1991 |
| | | | US | 4935156 A | 19-06-1990 |
| | | | US | 5025131 A | 18-06-1991 |
| | | | US | 5093898 A | 03-03-1992 |
| FR 2516293 | A | 13-05-1983 | FR | 2516293 A1 | 13-05-1983 |
| JP 9067462 | A | 11-03-1997 | AUCUN | | |

EPO FORM P0460

Pour tout renseignement concernant cette annexe : voir Journal Officiel de l'Office européen des brevets, No. 12/82